# EUROPEAN PATENT APPLICATION

(11) **EP 2 636 919 A2**
(43) Date of publication of application: **11.09.2013**
(21) Application number: 13157979.9
(22) Date of filing: 06.03.2013
(51) Int. Cl.: F16F 9/14

(54) **Rotary damper**

(30) Priority: 06.03.2012 DK 201270100
(71) Applicant: PRESSALIT A/S, 8680 Ry (DK)
(72) Inventor: Pedersen, Henrik, 8600 Silkeborg (DK); Pinderup, Martin, 7600 Struer (DK)
(74) Representative: Tellefsen, Jens J.

(57) **Abstract**

A rotary dampern (1) comprising:
- a housing (2) having a fluid filled chamber inside said housing (2);
- a rotating member (5) disposed inside said chamber, where said rotating member (5) has a longitudinal rotation axis about which the rotating member (5) rotates, and where one or more fins (21,22) projects radially from said rotating member (5), and where an engagement section of said rotating member (5) projects axially outside said chamber, through a fluid tight chamber wall (7) characterised in that
- the radial distance between the outer edges (21',22') of the one or more fins (21,22) and the rotation axis is smaller than the distance from the rotation axis to the inner side of the chamber, and
- that valve means (30) are provided along at least a part of one side of said one or more fins (21,22), which valve means (30) are radially displaceable between a position where said valve means (30) extends radially beyond the edge (21',22') of the fin (21,22) and a position where the fin (21,22) extends radially beyond the valve means (30), where said displacement of the valve means (30) is created by a step (40) arranged adjacent the one or more fins (21,22), where said valve means (30) engages the step (40) and is urged radially outwards, when the rotating member (5) is rotated.

## Description

### Field of the Invention

The present invention relates to a rotary damper as well as a toilet seat and/or cover combination comprising such a damper.

### Background of the Invention

Viscous dampers are used for a multitude of purposes, but are probably most widely known for dampening the closing of toilet seats and covers.

Typically a damper of the type to which the present invention is directed comprises an outer housing inside of which a chamber is provided. The chamber is usually substantially filled with a fluid, typically a viscous oil, and also disposed inside the housing is a rotating member. The rotating member typically has an engagement section extending outside the oil-filled chamber. When the damper is arranged for example in a toilet seat arrangement the housing will be mounted to for example a stationary part such as the hinge part attached to the toilet bowl, whereas the engagement member will be attached or brought into frictional engagement with for example the cover or the seat of the toilet arrangement. The viscous oil will create fluid friction inside the chamber such that the rotating member will be slowed down in its rotation whereby the toilet seat and/or cover will be provided with a smooth and slow closing action.

In the art there are various examples of constructions of this type of dampers, see for example US 2003 15067, US 2003 234145, US 2005 072639, US 2003 12671, US 672598 and US 5697122.

Typically, the rotating member will be provided with fins, and furthermore the rotating member will usually be cast in a metal alloy, typically comprising a high content of zink. As the proper functioning of the damper relies on the rotating member's ability including the fins to allow the oil to pass the fins at a certain rate in order to provide the desired dampening action the fin in combination with various valve means needs to be reliable, strong and easy to manufacture, as these types of devices are expected to have a very long life expectancy.

At the same time, due to the relatively compact construction the tolerances need to be kept at a minimum which on the other hand increases manufacturing costs.

### Object of the Invention

It is therefore an object of the present invention to provide a new and improved construction which improves on the prior art and at the same time alleviates the disadvantages which are present with the prior art devices.

### Description of the Invention

The invention addresses this by providing a rotary damper comprising
- a housing having a fluid filled chamber inside said housing;
- a rotating member disposed inside said chamber, where said rotating member has a longitudinal rotation axis about which the rotating member rotates, and where one or more fins projects radially from said rotating member, and where an engagement section of said rotating member projects axially outside said chamber, through a fluid tight chamber wall characterised in that
- the radial distance between the outer edges of the one or more fins and the rotation axis is smaller than the distance from the rotation axis to the inner side of the chamber, and
- that valve means are provided along at least a part of one side of said one or more fins, which valve means are radially displaceable between a position where said valve means extends radially beyond the edge of the fin and a position where the fin extends radially beyond the valve means, where said displacement of the valve means is created by a step arranged adjacent the one or more fins, where said valve means engages the step and is urged radially outwards, when the rotating member is rotated.

Particularly the feature that the fins of the engagement members do not extend all the way to the housing provides for substantial advantages in that typically and especially when the rotating members are made from a cast metal alloy the mould connection line will typically be present on top of the fin, i.e. the part of the fin being closest to the housing. In the embodiments of the prior art where the fin is supposed to be in close proximity to the inside wall of the housing this undesired cast created mould line may create friction against the housing and in this manner create unnecessary wear and tear. Furthermore, as the wear continues the metal alloy may be grinded against the housing such that metal pieces become suspended in the oil, which may hamper the proper functioning of the valves which are typically arranged in the fins.

Therefore, by having fins which do not extend to the housing the present invention may be manufactured with relatively larger tolerances without this having influence on the proper workings of the damper and at the same time there is no risk of irregularities stemming from the casting process causing wear and tear inside the damper.

The provision of a step in connection with movable valve means ensures that as pressure is urged on the valve means due to the rotation of the rotation member against the oil inside the housing, the valve means will be forced against a step where the valve means will be radially displaced until the valve means further comes into contact with the fin and thereby comes into a rest position where the valve means is radially extended such that the innermost portion of the valve means is in contact with the part of the step which is radially furthest from the centre of the rotation axis. When being rotated in the opposite direction the valve means will be urged in the opposite direction such that the valve means will come out of contact with the step and be radially displaced towards the rotation axis thereby allowing more oil to pass between the fins and the housing.

In a further advantageous embodiment the one or more fins is/are provided with one or more apertures through said fin(s), and where the valve means comprises a valve plate substantially arranged with the valve plates plane radially to the rotation axis, and where means projects from the valve plate through the one or more apertures in the fin(s) in order to moveably retain the valve means relative to the fin(s). With this arrangement of the valve means the valve plate will be influenced by the viscous fluid which is typically an oil such that they will be urged towards the fin and thereby up on the step as already explained above.

On the other hand, when the rotation member is rotated in the opposite direction the apertures through the fins and the means projecting through the apertures will due to the influence of the oil cause the valve plate to be removed from contact with the fin and thereby slide down the step again and open the oil passage between the edge of the fin towards the housing and the housing itself. In this manner it is ensured that the valve will both close and open and that the valve means and in particular the valve plate will stay in place regardless of the direction of operation.

In a still further advantageous embodiment the step is arranged as a wedge between the rotating member's surface and a lower part of the fin's/fins' surface adjacent the rotating member, where the height of the step is equal to or slightly smaller or slightly larger than the radial distance between the free end of the fin and the inner wall of the chamber.

The dimensions of the step, especially in the radial direction, influence the extent of the valve plate's displacement. It is not necessary that the valve plate is radially displaced such that it comes into contact or fits tightly/snugly against the inner wall of the housing. The object of the damper is to allow rotation, but only to slow down the rotation such that the toilet seat or cover does not slam down on the toilet bowl. It is therefore allowable that an amount of oil may escape around the fin and the valve plate at all times. This again lessens the requirements for very small tolerances and allows a certain play in the construction which emphasizes the usefulness and the ease of manufacture such that it is both cheaper and faster to manufacture the damper and at the same time the reliability is increased.

In a further advantageous embodiment of the invention the edge of the valve plate closest to the rotating member is chamfered. By chamfering the edge of the valve which comes into contact with the wedge step the relative movement between the step and the valve plate during rotation is further eased such that the proper functioning of the valve construction and thereby the damper is ensured.

The invention is also directed to a toilet seat and/or cover combination comprising means for fastening said seat and/or cover to a toilet bowl, which means includes a hinge mechanism, and that one or more rotary dampers according to any of claims 1 to 6 is integrated into said hinge mechanism in order to dampen the closing movement of said seat and/or cover.

Although the damper is specifically developed for use in combination with a toilet seat and/or cover combination the damper may be used with the same advantages as already mentioned above in a multitude of other applications.

### Description of the Drawing

The invention will now be explained with reference to the accompanying drawings wherein:
- Figure 1: illustrates a damper according to the invention
- Figure 2: illustrates a housing from which the rotating member has been removed
- Figure 3: illustrates the rotating member including the valve means
- Figure 4: illustrates the valve means, and in particular the valve plate urged against the fins
- Figure 5: illustrates the rotating member
- Figure 6 and 7: illustrate the movement of the valve means
- Figure 8 and 9: illustrate a cross section through the rotating member

### Detailed Description of the Invention

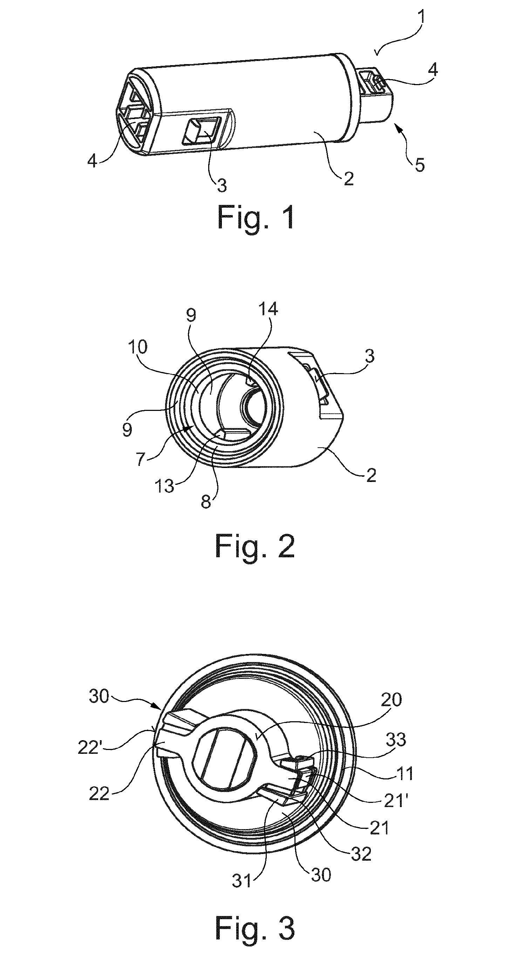

In figure 1 is illustrated a damper 1 according to the invention. The damper housing 2 is provided with features such as snap fittings 3 interlocking key engagement means 4 which are all described in the same applicant's prior, but not yet published international patent application PCT/DK2011/050519. Within the scope of the present invention these features have no bearing but are only used as an example in order to illustrate what a damper according to the invention may look like.

The inventive features will be described below with reference to the remaining figures.

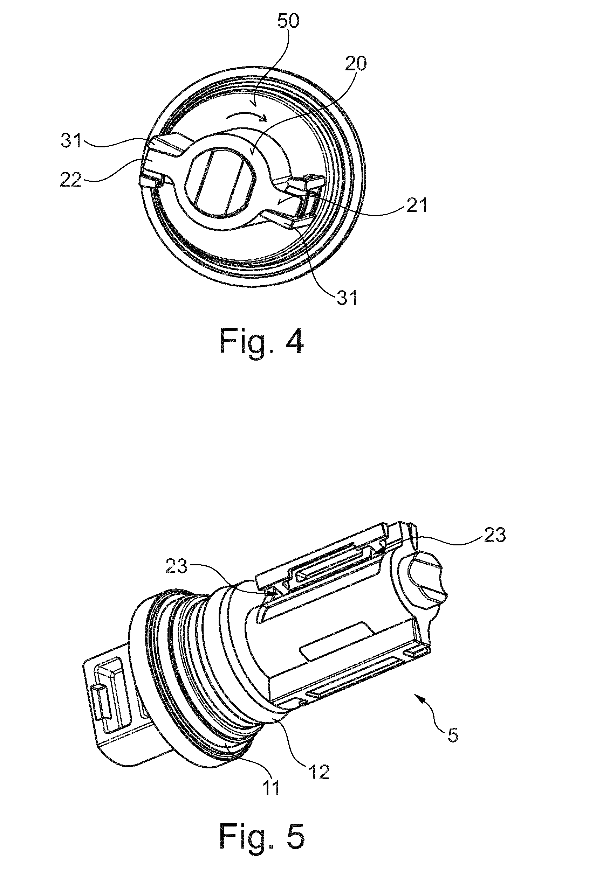

In figure 2 is illustrated a housing 2 from which the rotating member 5 (see figure 5) has been removed. The rotating member has an engagement section which projects axially outside the housing 2 through a fluid-tight chamber-wall 7. The fluid-tight chamber-wall 7 is in this embodiment constructed by an inner ridge 8 provided on the inside wall 9 of the housing. In the ridge 8 is provided a recess, typically having a semicircular cross-section into which recess a rubber seal in the shape of an O-ring 10 is fitted. The O-ring 10 will fit snugly against the seat 11 (see figure 5) on the rotating member 5. The rotating member 5 will in turn have a further O-ring 12 which also ensures the liquid integrity of the damper.

Inside the housing on the inner wall 9 is provided two stops 13, 14. These stops serve to limit the amount of rotation possible with the damper. For this particular embodiment of the damper which is foreseen to be used with a toilet seat and cover it is desirable that the damper may only allow rotation through 100° or 110° whereas in other embodiments it may be desirable to have a dampening effect through 360° in which embodiments the stops 13, 14 will not be present.

Turning to figure 3 the rotating member 20 including the valve means 30 are illustrated. In this embodiment the rotating member 20 is provided with two fins 21, 22 where valve means 30 are arranged in and around each fin 21, 22. In the illustrated embodiment depicted in figure 3 the valve is open meaning to say that the valve means 30 have not been urged out radially with respect to the rotating member's rotation axis and that the valve therefore does not try to close the gap between the edge of the fins 21', 22' and the inner wall 9 of the housing. In this position the valve means and the fins provide little resistance against rotation. The valve means 30 comprises a valve plate 31 which by means 32 in this embodiment connects the valve plate 31 to a back stop 33. The connection means 32 passes through slits 23 (see figure 5) and in this manner the connections means connects the valve plate with the back stop 33 such that the valve means is an integrated unit.

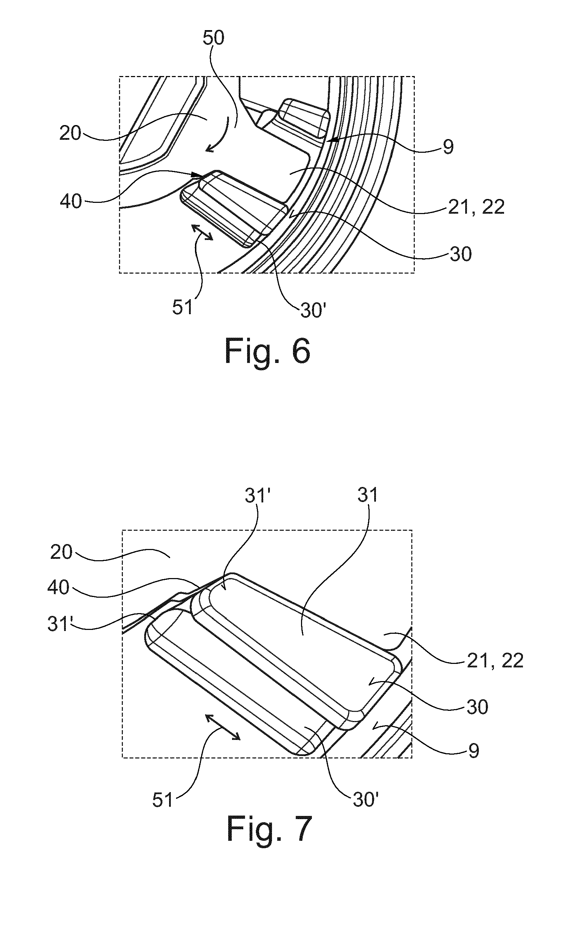

As the rotating member 20 is inserted in the housing 2 with the valve means 30 placed in the slits 23 in the fins 21, 22, the valve means 32 may be displaced radially due to the valve plate's engagement with the step 40 as will be explained in detail with reference to figures 6, 7, 8 and 9.

As already discussed above with reference to figure 3 the valve means 30 in figure 3 is depicted as being open, i.e. the valve plate 31 is not in contact with the fins 21, 22 and has not been radially displaced due to engagement with the step. In figure 4 the valve means, and in particular the valve plate 31, is due to rotation of the rotating member 20 in the direction indicated by the arrow 50 urged against the fins 21, 22 causing radial displacement of the valve means and thereby closing of the free space through which the oil may flow as the rotating member 20 rotates.

In figures 6 and 7 is illustrated the movement of the valve means 30. The rotating member 20 is only illustrated partly and only one fin 21, 22 is illustrated in the close-ups. The valve means is illustrated in both positions such that the closed position of the valve means 30 is illustrated in bold whereas the open position is illustrated with phantom lines 30'. In the open position as illustrated by the phantom lines 30' the valve means 30' is not in engagement with the step 40. Therefore, the valve means 30' is free to move radially as indicated by the arrow 51 in the free space between the surface of the rotating member 20 and the inner wall 9 of the housing. As the rotating member is urged in the direction of the arrow 50 the chamfered edge 31' of the valve plate 31 will engage step 40 and travel up the step 40 until the valve plate engages the side of the fin 21,22.

During this movement the valve plate 31 and thereby the valve means 30 will move from a free position as illustrated with reference to the valve means 30' into a position as illustrated by the valve means 30 where the step 40 due to its engagement with the chamfered lower edge 31' of the valve plate 31 forces the valve means in a radial direction out towards the inner wall 9 of the housing. In this manner the area through which oil may flow in the direction of rotation as illustrated by the arrow 50, see figure 6, is reduced and a dampening effect is achieved.

However, when the rotating member 20 is rotated in the opposite direction of the indication by the arrow 50 the valve means 30 will move from the position as indicated in bold with reference to valve means 30 into a position indicated by 30' where a larger volume is available for the oil to pass the fins whereby a lesser dampening effect will be achieved.

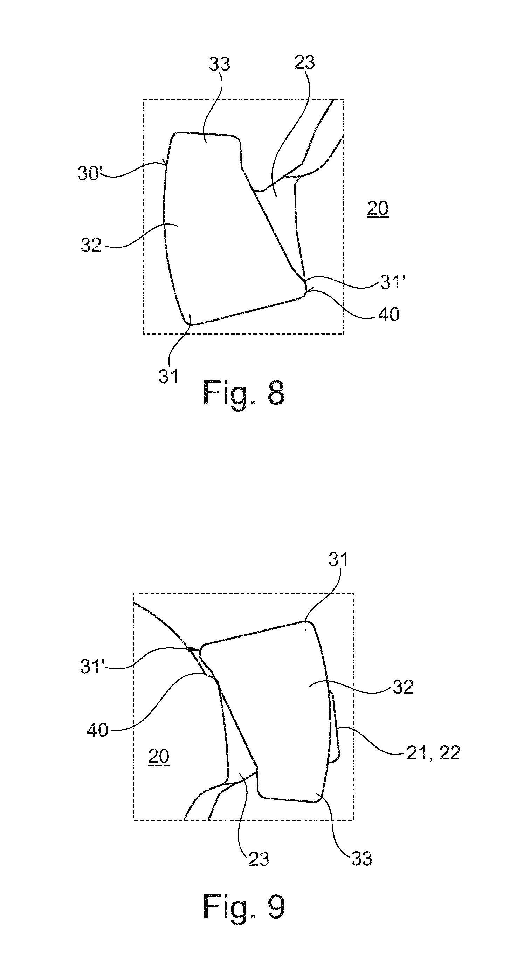

In figures 8 and 9 is illustrated a cross section through the rotating member 20 in a position where the connection means 32 passes through the slit 23 provided in the fins of the rotating member 20. As is evident from figure 8 the valve plate 31 and in particular the lower chamfered edge 31' of the valve plate 31 has been moved radially outwards due to its engagement with the step 40 and as such the fin is not visible or projects past the valve means' 30 outer edge 30'. In the position indicated in figure 9 the lower edge 31' of the valve plate 31 is not in contact with the step 40 and the valve means 30 is not urged out radially relative to the rotating member 20 whereby it is possible to see part of the fins 21, 22.

## Claims

1. A rotary damper comprising:
- a housing having a fluid filled chamber inside said housing;
- a rotating member disposed inside said chamber, where said rotating member has a longitudinal rotation axis about which the rotating member rotates, and where one or more fins projects radially from said rotating member, and where an engagement section of said rotating member projects axially outside said chamber, through a fluid tight chamber wall **characterised in that**
- the radial distance between the outer edges of the one or more fins and the rotation axis is smaller than the distance from the rotation axis to the inner side of the chamber, and
- that valve means are provided along at least a part of one side of said one or more fins, which valve means are radially displaceable between a position where said valve means extends radially beyond the edge of the fin and a position where the fin extends radially beyond the valve means, where said displacement of the valve means is created by a step arranged adjacent the one or more fins, where said valve means engages the step and is urged radially outwards, when the rotating member is rotated.

2. The rotary damper according to claim 1 wherein the one or more fins is/are provided with one or more apertures through said fin(s), and where the valve means comprises a valve plate substantially arranged with the valve plates plane radially to the rotation axis, and where means projects from the valve plate through the one or more apertures in the fin(s) in order to moveably retain the valve means relative to the fin(s).

3. The rotary damper according to claim 1 or 2 wherein the step is arranged as a wedge between the rotating members' surface and a lower part of the fin(s) surface adjacent the rotating member, where the height of the step is equal to or slightly smaller or slightly larger than the radial distance between the free end of the fin and the inner wall of the chamber.

4. The rotary damper according to any preceding claim, wherein the edge of the valve plate closest to the rotating member is chamfered.

5. The rotary damper according to any preceding claim, wherein the rotating member and the fins are integrally cast, and made from a metal alloy, and where the housing is made from plastics.

6. The rotary damper according to any preceding claim, wherein the part of the rotating member projecting axially outside said chamber, comprises engagement surfaces suitable for engaging a toilet seat or cover.

7. Toilet seat and/or cover combination comprising means for fastening said seat and/or cover to a toilet bowl, which means includes a hinge mechanism, and that one or more rotary dampers according to any of claims 1 to 6 is integrated into said hinge mechanism in order to dampen the closing movement of said seat and/or cover.
